# EUROPÄISCHE PATENTANMELDUNG

(11) **EP 2 385 291 A1**
(43) Veröffentlichungstag der Anmeldung: **09.11.2011**
(21) Anmeldenummer: 10405097.6
(22) Anmeldetag: 06.05.2010
(51) Int. Cl.: F17C 13/04, F17C 5/06

(54) **Anordnung von pulsmodulierten Schnellschaltventilen, Tanksystem, Verfahren zum Bereitstellen eines angeforderten Massenstroms und Verwendung eines Tanksystems**

(71) Anmelder: Eugen Seitz AG, 8623 Wetzikon (CH)
(72) Erfinder: Gläser, Stefan Dr.-Ing., 8598 Bottighofen (CH); Janisch, Werner, 8607 Aathal-Seegräben (CH)
(74) Vertreter: EGLI-EUROPEAN PATENT ATTORNEYS

(57) **Zusammenfassung**

Die Erfindung betrifft eine Anordnung von pulsmodulierten Schnellschaltventilen (24' ... 24"") an einem Fluidspeicher (28' ... 28""), wobei die Ventile (24' 24'''') bei ansonsten identischem Aufbau unterschiedliche Nennweiten zu deren Betrieb in unterschiedlichen Druckbereichen aufweisen. Die Anzahl der Ventile (24' ... 24"") und deren jeweilige Nennweiten sind so gewählt und auf einen Schwankungsbereich des Drucks in dem Speicher (28' ... 28"") abgestimmt, dass über diesen Schwankungsbereich des Speicherdrucks hinweg, durch vollständiges Öffnen, vollständiges Schliessen und/oder Schalten einzelner Ventile (24' ... 24"") oder Ventilkombinationen, ein gesamthaft abgegebener Massenstrom des Fluids aus dem Speicher (28' ... 28"") in einem Schwankungsbereich anforderungsgemäss variierender Massenströme konstanten Drucks erzeugbar ist.

## Beschreibung

Die Erfindung betrifft eine Anordnung von pulsmodulierten Schnellschaltventilen an einem Fluidspeicher gemäss Patentanspruch 1, ein Tanksystem mit einem Fluidspeicher gemäss Patentanspruch 4, ein Verfahren zum Bereitstellen eines angeforderten Massenstroms gemäss Patentanspruch 14 und eine Verwendung eines Tanksystems gemäss Patentanspruch 16.

Es sind Brennstoffzellen als Energiequelle für Aggregate im Automobilsektor bekannt. Weit verbreitet werden hier Brennstoffzellen mit einer Protonenaustauschmembran (Proton Exchange Membrane PEM) verwendet, wobei die Anode der Brennstoffzelle mit Wasserstoff als Brennstoff und die Kathode mit Sauerstoff als Oxidationsmittel versorgt werden. Hierbei sind Anode und Kathode durch die Protonenaustauschmembran getrennt, durch welche die Protonen ausgetauscht werden, welche jedoch elektronisch nicht leitfähig ist. Durch diese elektrochemische Reaktion werden Wasserstoff und Sauerstoff zu Wasser umgewandelt. Hierbei wird elektrische Energie erzeugt, welche durch Elektroden an jeweils der Anode und Kathode abgegriffen wird. Bei einem Brennstoffzellensystem werden mehrere elektrisch in Reihe geschaltete Brennstoffzellen zusammengefasst.

Der Wasserstoff wird hierbei unter hohem Druck in einem Fluidspeicher gespeichert, welcher im Fahrzeug an einer möglichst geschützten Position untergebracht ist. Mit steigender Auslegung des Maximaldrucks des mit Wasserstoff gefüllten Fluidspeichers ist das Volumen (und somit die Grösse) dessen reduzierbar und/oder ist eine Erhöhung der Reichweite des mit dem Brennstoffzellensystem betriebenen Fahrzeugs möglich. Bei heutigen Brennstoffzellensystemen ist der Fluidspeicher mit einem Maximaldruck von 700 bar mit Wasserstoff befüllbar. Über Rohrleitungen gelangt der Wasserstoff in das Brennstoffzellensystem. Der Versorgungsdruck in das Brennstoffzellensystem liegt üblicherweise unter 4 bar, wobei der Massenstrom in Abhängigkeit von der Leistung im Bereich zwischen 0,008 g/sec und 2,500 g/sec liegt. Daher ist ein Druckregelventil im Verlauf der Rohrleitungen zwischen dem Fluidspeicher und dem Brennstoffzellensystem zwischengeschaltet, welches den Druck des Wasserstoffs innerhalb des Fluidspeichers auf den Versorgungsdruck im Brennstoffzellensystem vermindert und somit anpasst.

Herkömmliche Druckregelventile, welche zur Druckminderung von beispielsweise 700 bar auf ungefähr 10,0 bar ausgelegt sind, enthalten einen Zylinder, in dem der Wasserstoff eingeleitet wird, sowie einen Kolben und einen Ventilkörper, welche innerhalb des Zylinders angeordnet sind. Wenn der Druck des Wasserstoffs auf der stromabwärtigen Seite des Zylinders kleiner als ein vorbestimmter Druck ist, wird der Kolben entgegen der Richtung einer Rückstellkraft in eine Ventilöffnungsrichtung verlagert, bei welcher ein Ende des Kolbens die Öffnung des Ventilkörpers öffnet. Wenn der Druck des Wasserstoffs auf der stromabwärtigen Seite des Zylinders grösser als der vorbestimmte Druck ist, wird der Kolben in Richtung der Rückstellkraft in eine Ventilschliessposition verlagert, bei welcher ein Ende des Kolbens die Öffnung des Ventilkörpers verschliesst.

Hierbei spielen die Druckverhältnisse in einem Raum zwischen der Fläche des Kolbens und dem Eingang des Ventilkörpers eine wesentliche Rolle. Dieser Druck steht in Abhängigkeit zum (kleinsten) Durchmesser bzw. der Nennweite des Ventilkörpers. Je kleiner die Nennweite ist, desto grösser ist die Druckdifferenz zwischen dem Druckraum und dem Ausgang des Ventilkörpers. Ein innerhalb des Zylinders angeordnetes Federelement drückt den Kolben in die Ventilöffnungsposition. Aus dem Zusammenwirken zwischen insbesondere der Federkraft von diesem Federelement, den Flächen des Kolbens am Eingang und am Ausgang und der Nennweite erfolgt eine Verlagerung des Kolbens in die Ventilschliessposition, sobald der Druck am (Niederdruck-) Ausgang des Zylinders einen vorgegebenen (Nieder-) Druck übersteigt, wobei diese Verlagerung entgegen der Richtung der angelegten Kraft des Federelements gerichtet ist. In der Ventilschliessposition angelangt, reduziert sich der Druck am Ausgang des Zylinders auf einen Druck unterhalb des vorgegebenen (Nieder-) Drucks, woraufhin der Kolben in Richtung der angelegten Kraft des Federelements in die Ventilöffnungsposition verlagert wird. Diese Verlagerung des Ventilkörpers wiederholt sich während des Druckreduktionsbetriebes reziprok, sodass sich am Ausgang des Druckregelventils ein vorbestimmter Niederdruck mit geringer Schwankung einstellt.

Kraftfahrzeuge mit einem Brennstoffzellensystem als Aggregat enthalten als Fluidspeicher üblicherweise mehrere Tankbehälter, beispielsweise vier Tankbehälter, welche über Rohrleitungen miteinander verbunden sind. Hierbei steht eine Betankungsleitung über ein erstes Ventil, welches an einem ersten Tankbehälter angebracht ist, mit diesem in Verbindung. Von diesem ersten Ventil aus führt eine erste Rohrleitung zu einem zweiten Ventil eines zweiten Tankbehälters. Dieser zweite Tankbehälter steht wiederum über eine zweite Rohrleitung mit einem dritten Tankbehälter in Verbindung, usw. Somit stellt sich über die jeweiligen Rohrleitungen zwischen den Tankbehältern insgesamt ein Druckausgleich zwischen den mit Wasserstoff befüllten Tankbehältern ein. Das oben beschriebene Druckregelventil ist an eine abschliessende Rohrleitung am Ende des Systems gekoppelt und steht mit der Brennstoffzelle in Fluidverbindung.

Ein Nachteil dieser Anordnung besteht darin, dass sämtliche Rohrleitungen bis zum Eingang des Druckregelventils unter Hochdruck stehen. Hierdurch besteht eine besonders hohe Unfallgefahr, da die unter Hochdruck stehenden Rohrleitungen anfällig sind, undicht zu werden, wodurch ein unkontrollierbarer Wasserstoffstrom an die Aussenumgebung gelangen kann und sich entzünden könnte. Ein weiterer Nachteil besteht darin, dass die unter Hochdruck stehenden Rohrleitungen teuer sind, ein hohes Gewicht haben, sehr aufwendig in der Herstellung sind und zudem über teure Dichtungselemente angeschlossen werden müssen. Ein weiterer Nachteil besteht darin, dass die Rohrleitungen einen grossen Durchmesser haben müssen, da Druckregelventile, welche zur Druckreduktion von maximal 700 bar auf ungefähr 10,0 bar ausgelegt sind, bereits schon einen Ventilkörper mit einer Nennweite von ungefähr 3 mm enthalten. Da dieser grosse Durchmesser zum korrekten Betrieb des Druckregelventils im weiteren Verlauf niemals unterschritten werden darf, müssen auch die Rohrleitungen einen grossen Durchmesser haben, welches erhöhte Rohrleitungswandungen zur Folge hat. Hierdurch sind die Kosten der Rohrleitungen abermals erhöht, zudem sind Rohrleitungen mit derart dimensionierten Rohrleitungswandungen schwierig zu formen und zu verlegen.

Ein weiterer Nachteil besteht darin, dass das Druckregelventil, welches dazu ausgelegt sein muss, einen Druck von maximal 700 bar auf einen Druck von ungefähr 10,0 bar zu reduzieren, ein grosses Volumen hat, somit viel Platz in Anspruch nimmt, und ein hohes Gewicht hat. Bekannte Druckregelventile haben ein Volumen von ungefähr 7,0 cm x 7,0 cm x 18,6 cm und ein hohes Gewicht von ungefähr 2,5 kg.

Ein weiterer Nachteil besteht darin, dass das Druckregelventil erst dann einen geforderten Ausgangsdruck bzw. korrekten Massenstrom an das Brennstoffzellensystem bereitstellen kann, wenn zwischen den einzelnen Tankbehältern ein vollständiger Druckausgleich eingestellt ist. Dieser Druckausgleich steht wiederum in Abhängigkeit zum kleinsten Innendurchmesser der die einzelnen Tankbehälter verbindenden Rohrleitungen. Je grösser dieser kleinste Innendurchmesser ist, desto schneller findet ein Druckausgleich zwischen den einzelnen Tankbehältern statt. Jedoch nimmt hiermit auch der Aussendurchmesser der einzelnen Rohrleitungen zu, wodurch abermals hohe Kosten entstehen und viel Raum in Anspruch genommen wird.

Ein weiterer Nachteil besteht darin, dass einstufige Druckregelventile üblicherweise dazu ausgelegt sind, einen Eingangsdruck bis mindestens 10 bar zu regeln. Um auch Druckbereiche unterhalb von 10 bar regeln zu können, ist ein hierzu ausgelegtes zweites Druckregelventil notwendig. Hierdurch wird abermals viel Raum in Anspruch genommen und es werden hohe Kosten erzeugt.

Vor dem besagten Druckregler ist üblicherweise zudem ein Abschaltventil erforderlich, das mit dem weiteren Nachteil behaftet ist, dass es eine Vielzahl von Bauteilen aufweist, welche ineinander laufen und unterschiedliche Wärmeausdehnungskoeffizienten haben. So ist beispielsweise ein Dichtkolben aus Kunststoff gefertigt, während ein Führungsrohr aus Alubronze gefertigt ist. Diese Bauteile mit Materialien unterschiedlicher Wärmeausdehnungskoeffizienten sind direkt miteinander verbunden, zueinander angrenzend bzw. müssen ineinander laufen. Abschaltventile unterliegen dabei Temperaturen mit hohem Schwankungsbereich. Bedingt durch die unterschiedlichen Wärmeausdehnungskoeffizienten von z.B. angrenzenden Bauelementen kommt es zu unterschiedlichen Verformungen dieser Bauelemente, wodurch es zu Funktionsstörungen bis hin zu Blockierungen von einzelnen Bauteilen untereinander kommen kann. Hierbei kann es zu einem vollständigen Funktionsausfall des Druckregelventils kommen.

Ein weiterer Nachteil besteht darin, dass der am Ausgang des Druckregelventils anstehende Ausgangsdruck eine hohe Schwankung aufweist. Insgesamt geht mit einer Reduktion im Eingangsdruck auch eine Reduktion im Ausgangsdruck einher. Ein weiterer Nachteil besteht darin, dass das Federelement des Druckregelventils anforderungsgemäss dazu ausgelegt sein muss, eine hohe Kraft zum Drücken des Ventilkörpers in die Ventilöffnungsposition anzulegen. Bei herkömmlichen Druckregelventilen zum Reduzieren eines Wasserstoff-Ausgangsdrucks von maximal 700 bar auf ungefähr 10,0 bar sind anforderungsgemäss einstellbare Federelemente notwendig, welche eine Kraft von bis zu ungefähr 1000 N anlegen können. Ein Federelement, welches diesen Anforderungen genügt, ist schwierig einstellbar, weist im einstellbaren Bereich nicht-lineare Eigenschaften auf und hat ein hohes Gewicht.

Ein weiterer Nachteil besteht darin, dass das Druckregelventil anforderungsgemäss dynamische Dichtungen enthält, welche jeweils Dichtelemente umfassen, welche sich relativ zueinander bewegen. Diese dynamischen Dichtungen sind teuer, schwierig und zeitaufwendig installierbar, und besitzen eine hohe Wahrscheinlichkeit, Leckageverluste hervorzurufen. Aufgrund der permanenten Reibung der dynamischen Dichtungen sind sie einem raschen Verschleiss ausgesetzt. Ein weiterer Nachteil besteht darin, dass das Dichtelement des Abschaltventils einen Hochleistungskunststoff umfasst. Um Leckagen auszuschliessen, sind daher hohe Form- und Flächenanforderungen notwendig. Ein weiterer Nachteil besteht darin, dass ein Abschaltventil eine hohe Anzahl von Bauteilen besitzt. Diese Bauteile umfassen wenigstens zwei Federelemente, einen Dichtkolben, eine Pilotnadel, ein Verbindungselement, usw.

Ein weiterer Nachteil besteht darin, dass auch die bewegten Massen des Druckregelventils ein hohes Gewicht haben. Insbesondere ist der zu bewegende Ventilkörper somit einem erhöhten Verschleiss ausgesetzt. Ferner sind Führungen und Dichtungsflächen zwischen dem Ventilkörper und dem Zylinder einem hohen Verschleiss ausgesetzt, welches eine ungenaue Führung und eine mangelhafte Dichtung zwischen Ventilkörper und Zylinder zur Folge hat. Das Gewicht der zu bewegenden Massen eines herkömmlichen Druckregelventils beläuft sich auf beispielsweise 330 g. Ein weiterer Nachteil besteht darin, dass der Zwischenraum des Druckregelventils zur Atmosphäre hin offen sein muss. Genauer gesagt ist zwischen dem Raum innerhalb des Zylinders zur Aufnahme des Federelements und der Atmosphäre ein Druckausgleich notwendig, um der nachteiligen Wirkung einer Luftfederung zu entgehen.

Ein weiterer Nachteil der Anordnung besteht darin, dass eine hohe Anzahl von Leitungsschnittstellen notwendig ist. Bei einem Fluidspeicher, welcher sich beispielsweise aus vier Tankbehältern zusammensetzt, sind 13 Leitungsschnittstellen notwendig. Mit wachsender Anzahl von Leitungsschnittstellen steigt jedoch die Wahrscheinlichkeit eines Auftretens von Leckagen an. Ein weiterer Nachteil besteht darin, dass das Druckregelventil des zuvor beschriebenen Aufbaus für gewöhnlich geöffnet ist, da das Federelement den Ventilkolben in die Ventilöffnungsposition drückt. Diese dauerhaft geöffnete Position des Druckregelventils erhöht die Wahrscheinlichkeit von Beschädigungen durch Druckspitzen, wie sie beim Schalten des Abschaltventils erzeugt werden. Ausserdem erhöht sich die Gefahr von Druckverlusten.

Die EP 1 264 976 A1 offenbart ein Steuersystem für einen Kraftstoffmotor eines Fahrzeugs mit einem unter Druck stehenden Fluidspeicher, einer Leitung, die mit dem Fluidspeicher verbunden ist, und einem Schaltventil, das im Verlaufe der Leitung angeordnet ist, um die Zufuhr des Fluids aus dem Fluidspeicher an den Kraftstoffmotor zu regeln. Das Schaltventil ist durch ein elektromagnetisches Ventil gebildet, welches den Druck des dem Kraftstoffmotor zuzuführenden Fluids abhängig von dem daran anliegenden Massenstrom steuern kann. Das elektromagnetische Ventil wird durch Befehle von einer Steuereinheit (ECU) in geöffnete/geschlossene Zustände gesteuert. Das elektromagnetische Ventil hat hierbei einen variablen Öffnungsgrad, welcher proportional zu einer angelegten Spannung ist. Diese Spannung wird wiederum durch die ECU in Abhängigkeit von Betriebsparametern des Kraftstoffmotors ausgegeben. Es besteht ein Nachteil darin, dass dieses Schaltventil ungenau arbeitet, da der Massenstrom lediglich über den geringen Verstellweg der Ventilnadel in Relation zum Ventilsitz regelbar ist.

Zur präziseren Durchleitung des Massenstroms sind pulsmodulierte Schnellschaltventile bekannt. Durch unterschiedliche Frequenzen oder unterschiedliche Öffnungszeiten (bei gleicher Frequenz "Pulsweitenmodulation") wird eine unterschiedliche Fluidmenge durch das Schnellschaltventil geleitet. Hierdurch ist ein unterschiedlicher Ausgangsdruck und/oder Massenstrom einstellbar. Analog zum zuvor beschriebenen Druckregelventil wird auch hier der Ansatz der Druckreduktion übernommen. Hier werden eine Dekompressionskammer und eine Druckeinstellkammer definiert, und der bewegbare Kolben enthält eine zur Dekompressionskammer freiliegende Druckaufnahmefläche und eine zur Druckeinstellkammer freiliegende Druckeinstellfläche. Wenn somit die Kraft, die an die Druckaufnahmefläche angelegt wird, grösser ist als die Kraft, die an die Druckeinstellfläche angelegt wird, bewegt sich der Kolben in Richtung zu der Druckeinstellkammer hin. Dies bewirkt, dass der Ventilkörper des Kolbens den Ventilsitz schliesst, wobei die Strömung eines Fluids von der Ventilkammer zu der Dekompressionskammer unterbrochen wird. Wenn hingegen die Kraft, die an die Druckaufnahmefläche angelegt wird, geringer ist als die Kraft, die an die Druckeinstellfläche angelegt wird, bewegt sich der Kolben in Richtung zu der Dekompressionskammer hin. Dies bewirkt, dass der Ventilsitz geöffnet wird. Somit lässt sich die Differenz zwischen diesen beiden Kräften durch eine geeignete Wahl der Druckaufnahmefläche und der Druckeinstellfläche bzw. deren Relation zueinander einstellen.

Ferner ist ein weiterer Einstellparameter durch die Nennweite eines Jochteils gegeben. Das Schnellschaltventil kann optional das zuvor beschriebene Federelement zum Zurückführen des Kolbens enthalten. Ferner ist eine Elektromagnetventilanordnung enthalten, welche aus einem Elektromagneten und einem Anker besteht. Der Anker ist hierbei als der Kolben ausgebildet. Der Elektromagnet ist axial um den Anker herum angeordnet. Bei einer Bestromung des Elektromagneten wird der Anker durch ein induziertes elektromagnetisches Feld und eine dadurch hervorgerufene magnetische Kraft von der Öffnungsposition zur Schliessposition oder umgekehrt gedrückt.

Aus der Wechselwirkung zwischen der rein mechanischen Anordnung (Druckdifferenz in Relation zu den Ankerflächen, geeignete Wahl der Nennweite des Jochteils, optionale Federkraft, usw.) und der elektrischen Anordnung (ansteuerbar erzwungene reziproke Bewegung des Ankers) ist ein Schnellschaltventil geschaffen, welches an seiner Ausgangsseite einen gewünschten Fluiddruck und/oder Massenstrom mit geringer Schwankungsbreite bereitstellt.

Ein Problem besteht darin, dass ein solches Schnellschaltventil aus dem Stand der Technik lediglich zur Druckreduktion innerhalb eines vorbestimmten Druckbereiches einsetzbar ist. So sind beispielsweise Schnellschaltventile zum Verarbeiten von einem maximalen Eingangsdruck mit einem Jochteil einer minimalen Nennweite bereitgestellt, welche diesen maximalen Eingangsdruck auf einen gewünschten Niederdruck reduzieren. Der Parameter "Nennweite" und die weiteren Parameter des Schnellschaltventils sind dabei derart bestimmt, dass die Kraft zum Bewegen des Ankers in die Ventilschliessrichtung innerhalb eines vorbestimmten Bereiches im Betrieb ausreicht. Dies ist notwendig, damit die Bauteile zur Ausgestaltung der Elektromagnetventilanordnung, das heisst der Anker und der Elektromagnet, derart dimensioniert und bemessen sind, dass Vorgaben hinsichtlich der Gesamtgrösse des Schnellschaltventils nicht verletzt werden.

Mit anderen Worten: Mit einem abnehmenden Hochdruck, welcher unterhalb eines unteren Schwellwerts fällt, kann die Kraft, die nötig ist, um den Anker in die Ventilschliessposition zu versetzen, nur erzielt werden, indem der Elektromagnet und der Anker jene Ausgestaltungen bzw. Ausmasse hinsichtlich der Baugrösse, Anzahl von Kupferwindungen, Durchmesser des Kupferdrahts (beim Elektromagneten), usw. annehmen, welche nicht mehr den Vorgaben hinsichtlich der Ausmasse und des Gewichts von dem Schnellschaltventil entsprechen. Somit ist, bei Einhaltung der Vorgaben hinsichtlich der Ausmasse und des Gewichts von dem Schnellschaltventil, ein Hochdruck, dessen Grösse unterhalb des unteren Schwellwertes fällt, nicht mehr zu regeln bzw. zu reduzieren. Im Umkehrschluss wäre ein Schnellschaltventil, welches einen Hochdruck im Bereich von nahezu sämtlichen Druckbereichen verarbeiten kann, unverhältnismässig gross und schwer. Durch die Bereitstellung der Elektromagnetventilanordnung mit erhöhter Leistung muss die Anzahl von Kupferwindungen des Elektromagneten erhöht werden, wodurch das Gewicht erhöht wird und zusätzliche Kosten entstehen.

Insbesondere im Automobilbau mit steigenden Vorgaben hinsichtlich der Raumökonomie und der Gewichtseinsparung stösst ein herkömmliches Schnellschaltventil hinsichtlich seines Einsatzes zur Druckreduktion eines Hochdrucks, welcher einen unteren Schwellwert unterschreitet, schnell an seine Grenzen. Somit könnte ein Fluid in einem Fluidspeicher, dessen Druck unterhalb des Schwellwerts gefallen ist, gar nicht mehr verarbeitet werden. Betrachtet auf die Applikation im Automobilsektor, würde eine bestimmte Fluidmenge ungenutzt im Fluidspeicher verbleiben, welches u.a. grosse Nachteile hinsichtlich der Reichweite des Fahrzeugs hat.

Es ist eine Aufgabe der vorliegenden Erfindung, eine Anordnung von pulsmodulierten Schnellschaltventilen an einem Fluidspeicher, ein Tanksystem mit einem Fluidspeicher, ein Verfahren zum Bereitstellen eines angeforderten Massenstroms und eine Verwendung eines Tanksystems bereitzustellen, wobei ein konstanter Ausgangsdruck auch bei einem stark variablen Eingangsdruck und einem stark variablen Massenstrom bereitgestellt wird.

Diese Aufgabe wird durch eine Anordnung von pulsmodulierten Schnellschaltventilen an einem Fluidspeicher gemäss Patentanspruch 1 gelöst. Die Besonderheit dieser Anordnung von pulsmodulierten Schnellschaltventilen besteht darin, dass jene Schnellschaltventile geschaltet bzw. betrieben werden, die für den angeforderten Massenstrom und den jeweils anliegenden Ausgangsdruck nötig sind. Es kann auch lediglich ein einziges Schnellschaltventil geschaltet bzw. betrieben werden.

Bei einem hohen Eingangsdruck und bei Anforderung eines maximalen Ausgangsdrucks und/oder maximalen Massenstroms wird z.B. lediglich jenes pulsmodulierte Schnellschaltventil geschaltet, welches im Vergleich zu den weiteren Schnellschaltventilen die kleinste Nennweite hat. Somit ist die elektrische Leistung, die zum Schalten des Schnellschaltventils benötigt wird, im Vergleich zum Betrieb der weiteren Schnellschaltventile sehr klein. Im Umkehrschluss reicht ein Elektromagnet mit einer geringen Leistung aus. Dies hat vorteilhafte Auswirkungen zur Reduktion der Grösse des Elektromagneten und somit insbesondere auch zur Reduktion der Gesamtgrösse des Schnellschaltventils. Bei einem niedrigeren Eingangsdruck wird für die Bereitstellung von einem maximalen Ausgangsdruck und/oder maximalen Massenstrom ein Schnellschaltventil mit einer grösseren Nennweite geschaltet. Auch bei diesem Schnellschaltventil wird eine geringe elektrische Leistung zum Schalten benötigt, sodass wiederum ein Elektromagnet mit einer geringen Leistung notwendig ist. Der Elektromagnet und somit insgesamt das Schnellschaltventil haben daher eine geringe Baugrösse.

Zusammengefasst können alle Schnellschaltventile mit der gleichen Baugrösse und Bauart aufgebaut werden. Ein einzelnes Schnellschaltventil oder mehrere Schnellschaltventile aus der Anordnung arbeiten somit, exakt aufeinander abgestimmt, gegen den jeweils anliegenden Eingangsdruck unter Berücksichtigung des bereitzustellenden Ausgangsdrucks und/oder Massenstroms an. Unter Berücksichtigung dieser Parameter werden dann lediglich jene Schnellschaltventile betrieben, welche zu diesem Zeitpunkt auch optimal darauf abgestimmt sind. Somit sind die Schnellschaltventile derart ausgelegt, dass sie lediglich beim Vorliegen der für sie abgestimmten Bereiche (Eingangsdruck und bereitzustellender Ausgangsdruck und/oder Massenstrom) schalten.

Ein zum Einsatz in der erfindungsgemässen Anordnung besonders geeignetes Schnellschaltventil weist ein jeweiliges Druckrohr auf, mit einem darin gegen eine Düsenkomponente beweglich gelagerten Anker aus einem magnetisch leitfähigen Material, wobei das Druckrohr von einem zylinderförmigen Elektromagneten umgeben ist, dessen axiale Enden über einen Bewegungsbereich des Ankers in dem Rohr hinausreichen und magnetisch leitfähig mit einem Kern und einem Jochteil des jeweiligen Ventils verbunden sind, die den Bewegungsbereich des Ankers in dem Druckrohr festlegen, und der Anker das Jochteil wenigstens teilweise umgreift. Dadurch wird ein magnetischer Fluss erzeugt, der zum einen durch die im Druckrohr befindlichen, magnetisch leitfähigen Teile erheblich verstärkt wird. Dadurch, dass der Anker das Jochteil wenigstens teilweise umgreift, ist dieser auch fast unterbruchfrei gewährleistet. Insgesamt wird damit eine Öffnung des Ventils über einen besonders weiten Druckbereich hinweg bis hin zu sehr hohen Drücken möglich, wie sie z.B. bei Tanksystemen für Brenngase vorkommen.

Vorzugsweise ist der Fluidspeicher als ein einziger Tankbehälter ausgebildet, welcher einen Ventilkopf aufweist, der eine Gruppe von Schnellschaltventilen umfasst. Durch diese direkte Anordnung der Gruppe von Schnellschaltventilen im Ventilkopf des einzigen Tankbehälters wird die gesamte Ausgangsleitung vom Tankbehälter bis zur Brennstoffzelle mit dem sehr geringen Ausgangsdruck beaufschlagt. Somit kann diese Ausgangsleitung einen weitaus geringeren Aussendurchmesser und eine geringere Materialdicke umfassen. Ferner kann diese Ausgangsleitung im Vergleich zu einer Hochdruckleitung weniger aufwendig abgedichtet sein, wodurch Gewicht und Kosten eingespart werden.

Vorzugsweise besteht der Fluidspeicher aus mehreren miteinander verbundenen Tankbehältern, die einen jeweiligen Ventilkopf aufweisen, welcher ein einziges Schnellschaltventil umfasst. Diese Lösung ist insbesondere bei einem Fahrzeug, welches mit einer Brennstoffzelle betrieben wird, sehr vorteilhaft. Bei diesen Fahrzeugen ist der Fluidspeicher aus mehreren zumeist zylindrischen Tankbehältern ausgebildet, welche z.B. horizontal nebeneinander angeordnet in einem definierten Raum innerhalb des Kraftfahrzeugs untergebracht sind. Durch die jeweils zylindrische Ausbildung eines einzelnen Tankbehälters kann dieser in Relation zum Materialeinsatz mit einem maximalen Druck beaufschlagt werden. Zudem werden die von ausserhalb einwirkenden Kräfte, beispielsweise hervorgerufen durch eine Fahrzeugkollision, am wirksamsten abgeleitet. Somit erlaubt diese Anordnung den maximalen Schutz gegen eine Leckage oder ein Zerbersten beim Auftreffen von Aussenkräften, beispielsweise hervorgerufen durch eine Kollision.

Bei horizontaler Anordnung der einzelnen Tankbehälter in einer Ebene wird bei maximaler Sicherheit zudem ein so gering wie mögliches Raumvolumen in Anspruch genommen. Bei dieser im Stand der Technik bekannten Anordnung von Tankbehältern werden die jeweiligen Ventilköpfe mit lediglich einem einzigen Schnellschaltventil bestückt. Hierbei hat dann jedes der Schnellschaltventile eine Jochteildüse mit unterschiedlicher Nennweite. Beispielsweise ist der Fluidspeicher aus vier miteinander verbundenen Tankbehältern zusammengesetzt, wobei die Ventilköpfe dieser Tankbehälter jeweils ein einziges Schnellschaltventil mit einer Jochteildüse mit jeweils abgestuften Nennweiten zwischen ungefähr 0,2 und 2,5 mm enthalten.

Bei einem maximalen Eingangsdruck bis zu 900 bar, wie er beispielsweise bei frisch betankten Tankbehältern vorherrscht, wird dann, in Abhängigkeit des benötigten Massenstroms und/oder Ausgangsdrucks, z.B. lediglich das Schnellschaltventil mit einer Jochteildüse einer kleinsten Nennweite zur Ventilöffnung beschaltet. Bei einem Eingangsdruck von 250 bis 15 bar kann das Schnellschaltventil mit einer Jochteildüse einer zweitkleinsten Nennweite zur Ventilöffnung beschaltet werden. Bei einem Eingangsdruck von 130 bis 15 bar kann ferner das Schnellschaltventil mit einer Jochteildüse einer drittkleinsten Nennweite zur Ventilöffnung beschaltet werden. Bei einem noch niedrigeren Eingangsdruck kann dann das Schnellschaltventil mit einer Jochteildüse einer viertkleinsten Nennweite zur Ventilöffnung beschaltet werden. Das zuvor beschriebene Beispiel dient lediglich zur prinzipiellen Erläuterung der Anordnung, wobei die kleinste, zweit-, dritt- und viertkleinste Nennweite so verstanden werden sollen, dass diese ausgehend von der kleinsten Nennweite immer grösser werden. Selbstverständlich können zusätzlich zwei, drei oder alle vier Schnellschaltventile zur Ventilöffnung beschaltet werden. Bei n = 4 Tankbehältern ergibt sich auf binäre Weise (die zwei Zustände werden definiert durch Ventilschliessposition / Ventilöffnungsposition) eine Schaltmatrix von 2ⁿ-1 = 15 Ventilschaltzuständen. Diese reichen von der Beschaltung des einzelnen Schnellschaltventils mit einer Jochteildüse einer kleinsten Nennweite bei maximalem Eingangsdruck zur Abgabe eines maximalen Ausgangsdrucks und/oder Massenstroms, bis hin zu der Beschaltung von allen vier Schnellschaltventilen bei minimalem Eingangsdruck bzw. nahezu entleerten Tankbehältern.

Somit stellt die Anordnung eine effiziente Beschaltung der Schnellschaltventile bereit - bei einer so weit wie möglich geringen Leistung, welche an die jeweiligen Elektromagneten anzulegen ist. Dies gilt zugleich unter Berücksichtigung des Eingangsparameters "Eingangsdruck" und des Ausgangsparameters "angeforderter Ausgangsdruck und/oder Massenstrom". Hierzu werden 15 Schaltzustände der jeweiligen Schnellschaltventile zur Verfügung gestellt. Durch diese hohe Anzahl von Schaltzuständen werden alle Parameter bei zugleich minimaler Leistungsbereitstellung an die jeweiligen Elektromagneten wirksam abgedeckt. Wie zuvor beschrieben, sind die Tankbehälter über Leitungen miteinander verbunden. Diese Verbindung ist mittels eines Rohrleitungssystems derart bereitgestellt, dass alle Tankbehälter mittels Druckausgleich mit einem identischen Druck beaufschlagt sind. Gegenüber der zuvor beschriebenen Anordnung, welche einen einzigen Tankbehälter enthält, welcher einen Ventilkopf aufweist, der eine Gruppe von Schnellschaltventilen umfasst, hat die zuletzt genannte Anordnung allerdings den Nachteil, dass Verbindungsleitungen zwischen den Tankbehältern geschaltet sind, welche mit Hochdruck beaufschlagt sind.

Die zuvor genannte Aufgabe wird ebenfalls durch ein Tanksystem gemäss Patentanspruch 4 gelöst.

Vorzugsweise weisen die Schnellschaltventile ein jeweiliges Druckrohr auf, mit einem darin gegen eine Düsenkomponente beweglich gelagerten Anker aus einem magnetisch leitfähigen Material, wobei das Druckrohr von einem zylinderförmigen Elektromagneten umgeben ist, dessen axiale Enden über einen Bewegungsbereich des Ankers in dem Rohr hinausreichen und magnetisch leitfähig mit einem Kern und einem Jochteil des jeweiligen Ventils verbunden sind, die den Bewegungsbereich des Ankers in dem Druckrohr festlegen, und der Anker das Jochteil wenigstens teilweise umgreift. Hierdurch wird ein magnetischer Fluss erzeugt, der durch die im Druckrohr befindlichen, magnetisch leitfähigen Teile verstärkt wird. Da der Anker das Jochteil wenigstens teilweise umgreift, ist der Pfad des magnetischen Flusses nahezu ohne Unterbrechung.

Vorzugsweise ist der Fluidspeicher als ein einziger Tankbehälter ausgebildet, welcher einen damit verbundenen Ventilkopf aufweist, der eine Gruppe von Schnellschaltventilen umfasst. Bei dieser sogenannten "Ein-Tank-Lösung" besteht ein Vorteil darin, dass alle zueinander bewegten Teile einen ähnlichen oder sogar gleichen Wärmeausdehnungskoeffizienten besitzen. Somit weisen insbesondere jene Bauteile, welche ineinander laufen, auch bei unterschiedlichen Temperaturen eine identische Wärmeausdehnung auf. Hierdurch wird auch bei hohen Temperaturschwankungen weitestgehend ein Materialversatz vermieden. Dadurch wird die Betriebszuverlässigkeit eines jeweiligen Schnellschaltventils, insbesondere die Dichtungseigenschaft, wesentlich erhöht. Ein weiterer Vorteil besteht darin, dass die maximale Nennweite der Jochteildüse im Vergleich zum Stand der Technik sehr viel geringer sein kann. Hierdurch kann die Druckrohrwandung sehr klein erstellt werden. Ausserdem sind auftretende magnetische Verluste sehr gering. Zusätzlich ist keine Niederdruckregeleinheit mehr nötig, da das Tanksystem schon alleine auf einen Ausgangsdruck bis zu ungefähr 2,0 bar reduziert. Hierdurch werden Kosten eingespart. Zudem wird das hohe Gewicht der Niederdruckregeleinheit eingespart.

Ein weiterer Vorteil besteht darin, dass beim Starten eines beispielsweise mit einer Brennstoffzelle betriebenen Kraftfahrzeugs keine Wartezeit vonnöten ist. Ein ganz wesentlicher Vorteil besteht darin, dass der Ausgangsdruck in Abhängigkeit des benötigten Massenstroms durch die intelligente Druckregelung unabhängig vom Eingangsdruck geregelt wird. Hierbei werden alle Betriebsparameter abgedeckt, sodass der benötigte Ausgangsdruck stets zuverlässig bereitgestellt wird - und zwar unabhängig davon, ob der Tankbehälter maximal befüllt ist oder nahezu entleert ist.

Ein ganz wesentlicher Vorteil besteht darin, dass sämtliche Leitungen ausserhalb des Tankbehälters lediglich mit Niederdruck beaufschlagt sind. Wie zuvor beschrieben, kann somit auf die Verlegung einer Hochdruckverrohrung verzichtet werden, wodurch Zeit, Kosten und Gewicht eingespart werden. Ein ganz wesentlicher Vorteil besteht zudem darin, dass im Falle einer Beschädigung dieser Leitungen, beispielsweise hervorgerufen durch eine äussere Krafteinwirkung, kein Wasserstoff mit maximalem Druck bis zu beispielsweise 700 bar, austreten kann. Hierdurch wird eine Gefahr durch Explosion oder durch plötzlich expandierendes Fluid ganz wesentlich reduziert.

Ein weiterer Vorteil besteht darin, dass innerhalb der Schnellschaltventile auch Standardfedern zum Einsatz kommen, welche eine Kraft von weniger als 10 N anlegen müssen. Diese Standardfedern haben einen im Wesentlichen linearen Kraft-Wege-Verlauf, ein geringes Gewicht, eine geringe Baugrösse und sind zudem kostengünstig erhältlich. Ein weiterer Vorteil besteht darin, dass konventionelle Schnellschaltventile verwendet werden können, deren Entwicklung bereits fortgeschritten ist. Hierdurch werden die Entwicklungszeit und damit verbundene Kosten reduziert. Es ist hierbei ein konventioneller Entwurf eines Pneumatikventils aus einem Anker im Zusammenspiel mit einer Dichtung anwendbar. Zusätzlich können die Dichtelemente der Ventile aus günstigen und universal einsetzbaren Elastomeren oder Kunststoffen hergestellt sein.

Wie zuvor beschrieben, wird die Leistung der Elektromagnetventilanordnung grundlegend aus jenen Parametern, wie beispielsweise Anzahl von Kupferwindungen, Durchmesser des Kupferdrahts, Länge der Kupferwindung, sowie Grösse und Material des Ankers bestimmt. Wie ebenfalls zuvor beschrieben, wird die Schaltmatrix zum jeweiligen Schalten bzw. Betreiben der Schnellschaltventile in Abhängigkeit der Eingangs- und Ausgangs-Parameter derart definiert, dass an den jeweiligen Elektromagneten eine so gering wie mögliche Leistung angelegt wird. Mit anderen Worten braucht die Elektromagnetventilanordnung, bestehend aus dem Elektromagneten und dem Anker, eine so gering wie mögliche Leistung zum Verschieben des Ankers aufzubringen. Somit können auch die Parameter wie z.B. Baugrösse und Material des Ankers derart gewählt werden, dass der Anker ein möglichst geringes Gewicht hat. Beispielsweise hat jeder Anker pro Schnellschaltventil ein Gewicht von lediglich 4 g.

Neben dem Vorteil der Gewichtseinsparung kann ferner eine hohe Schaltfrequenz erzielt werden. Ein weiterer Vorteil besteht darin, dass das System zur Atmosphäre komplett abgeschottet ist. Hierdurch werden Unfallrisiken verringert. Ein besonderer Vorteil gegenüber dem Stand der Technik besteht ausserdem darin, dass das Schnellschaltventil bei ausbleibender Bestromung geschlossen verbleibt. Somit wird das Auftreten von Leckagen innerhalb des Leitungssystems stark reduziert, wodurch auch die Unfallgefahr reduziert wird.

Ein Vorteil der Ein-Tank-Lösung besteht ferner darin, dass lediglich zwei Leitungsschnittstellen notwendig sind. Somit wird die Montagezeit zum Verlegen und Verbinden von Leitungen reduziert. Ferner werden Gewicht und Kosten reduziert. Zudem besteht auch hierbei der Vorteil, dass die Wahrscheinlichkeit des Auftretens von Leckagen reduziert werden kann. Ein weiterer Vorteil besteht darin, dass der Tankbehälter einen im Vergleich zum Stand der Technik grösseren Gesamtöffnungsquerschnitt aufweist. Hierdurch kann der Tankbehälter beinahe vollständig entleert werden, wodurch die Intervalle zur Neubefüllung verlängert werden, welches sich wiederum in einer grösseren Reichweite des Kraftfahrzeugs bemerkbar macht.

Ein weiterer wesentlicher Vorteil besteht darin, dass auch im Falle einer unbeabsichtigten Bestromung oder eines Bauteilausfalls kein unkontrolliert grosser Massenstrom möglich ist. Wie zuvor beschrieben, sind die Schnellschaltventile bei ausbleibender Bestromung stets geschlossen und ist die Leistungseingabe an den Elektromagnetventilaufbau derart begrenzt, dass die Elektromagnetkraft bei beispielsweise 700 bar Eingangsdruck ausreicht, um lediglich das Schnellschaltventil mit der kleinsten Nennweite zu öffnen. Hierbei ist der Betrieb eines jeden Schnellschaltventils unabhängig vom Ausgangsdruck. Somit wohnt dem Entwurf zugleich der Vorteil einer Massenstrombegrenzung inne, selbst bei unbeabsichtigter Bestromung oder einem Bauteilausfall.

Ein wesentlicher Vorteil des Tanksystems besteht in seiner hohen Flexibilität im Falle von Änderungen hinsichtlich der Rahmenbedingungen bzw. Parameter. Ändern sich die Rahmenbedingungen beispielsweise dahin gehend, dass ein höherer Eingangsdruck überführt bzw. auf einen geringen Ausgangsdruck reduziert werden muss, so braucht lediglich eine eingesetzte Jochteildüse gegen eine Jochteildüse mit kleinerer Nennweite ausgetauscht zu werden. Alternativ oder optional kann die Gruppe von Schnellschaltventilen um ein zusätzliches Schnellschaltventil erweitert werden. Somit ist eine hohe Flexibilität gewährleistet, welche eine Zeit- und Kostenreduktion mit sich bringt. Es besteht gegenüber dem Entwurf aus dem Stand der Technik auch ein Vorteil darin, dass die Ein-Tank-Lösung alle Hochdruckkomponenten und Hochdruckschnittstellen innerhalb des OTVs (One Tank Valves) hat. Hierdurch wird das Risiko einer Explosion oder raschen Druckexpansion sehr stark reduziert. Im Umkehrschluss können Leitungen und Schnittstellen schneller verlegt bzw. verschaltet werden.

Vorzugsweise besteht der Fluidspeicher aus mehreren miteinander verbundenen Tankbehältern, die einen jeweils damit verbundenen Ventilkopf aufweisen, welcher ein einziges Schnellschaltventil umfasst. Diese sogenannte "Mehr-Tank-Lösung" hat innerhalb eines Kraftfahrzeugs gegenüber der Ein-Tank-Lösung den Vorteil einer vermehrt flächigen Anordnung von Tankbehältern z.B. in der Horizontalen. Der Entwurf ist zudem flexibel und mit geringem Aufwand auf sich ändernde Rahmenbedingungen hinsichtlich des Raumangebots anpassbar. Gegenüber der Ein-Tank-Lösung sind hierbei allerdings mehr als zwei Leitungsschnittstellen notwendig. Bei n Tankbehältern sind (n - 1) * 4 + 2 Leitungsschnittstellen notwendig. Im Falle einer Anordnung von vier Tankbehältern sind somit 14 Leitungsschnittstellen notwendig. Ein weiterer Unterschied gegenüber der Ein-Tank-Lösung besteht darin, dass die gesamte Betankungsleitung, über welche neben der Betankung auch der Druckausgleich innerhalb der mehreren Tankbehälter stattfindet, auch im Anschluss an die Betankung unter einem Hochdruck steht.

Vorzugsweise ist eine Niederdruckseite des wenigstens einen Ventilkopfs zur Absorption von Druckwellen mit einem Ausgleichsbehälter verbunden. Hierdurch werden die durch die schnellen Druckunterschiede hervorgerufenen Druckwellen zuverlässig absorbiert. Der Ausgleichsbehälter ist ansonsten hermetisch verschlossen und kann beispielsweise ein Volumen von 5 Litern fassen.

Vorzugsweise umfasst der wenigstens eine Ventilkopf einen Temperatursensor zum Messen der Temperatur des Fluids in dem Tankbehälter. Somit kann der Parameter "Temperatur" als zusätzlicher Parameter bei der Auswahl und Anschaltung eines jeweiligen Schnellschaltventils berücksichtigt werden.

Vorzugsweise ist eine Hochdruckseite des wenigstens einen Ventilkopfes mit wenigstens einer Betankungsleitung verbindbar. Bei der Mehr-Tank-Lösung verläuft die Betankungsleitung über die jeweilige Hochdruckseite der Ventilköpfe hinweg, wobei jeweilige Abzweigungen mit dem jeweiligen Innenraum der Tankbehälter in Fluidverbindung stehen. Somit muss keine Abzweigung zu den einzelnen Tankbehältern bereitgestellt werden, wodurch Kosten, Gewicht und Zeit eingespart werden. Durch die parallele Verbindung der einzelnen Tankbehälter miteinander dient die Betankungsleitung zusätzlich als Druckausgleich zur Herstellung eines gemeinsamen Ausgleichsdrucks über alle Tankbehälter hinweg.

Vorzugsweise weisen die Schnellschaltventile eine Düsenkomponente mit jeweils unterschiedlicher Nennweite auf. Hierbei besitzen alle Schnellschaltventile einen Düsenkomponentensitz zur Aufnahme von einer von identisch ausgebildeten und geformten Düsenkomponenten mit jeweils unterschiedlicher Nennweite. Somit lässt sich der durch jedes Schnellschaltventil zu verarbeitende Druckbereich durch die entsprechende Wahl der Nennweite einer Düsenkomponente sehr einfach definieren. Alle Schnellschaltventile haben somit den gleichen Aufbau und lassen sich daher besonders kostengünstig herstellen.

Vorzugsweise liegt die Nennweite der einzelnen Schnellschaltventile in einem Bereich von ungefähr 0,2 mm bis 2,5 mm. Somit kann der Eingangsdruck in einem Bereich von beispielsweise 900 bar bis 10 bar, in Bereiche einzelner oder mehrerer Schnellschaltventile unterteilt, präzise auf einen angeforderten Massenstrom und/oder Ausgangsdruck geschaltet werden. Dies gilt zudem bei niedriger Leistungsaufnahme der Elektromagnetventilanordnung und daraus resultierender geringer Bauteilgrösse der Schnellschaltventile.

Vorzugsweise liegen der Schwankungsbereich des Speicherdrucks zwischen 10 bar und 900 bar und der Schwankungsbereich des angeforderten Massenstroms zwischen 0,005 g/sec und 2,500 g/sec bei einem konstanten Ausgangsdruck von kleiner 4,0 bar. In Abhängigkeit von der durch die Brennstoffzelle zu erzeugenden Leistung schwankt der angeforderte Massenstrom um den Faktor 400 und schwankt der Speicherdruck um den Faktor 80. Diesen hohen Schwankungen zum Trotz kann das Tanksystem einen konstanten Ausgangsdruck von kleiner 4,0 bar bereitstellen.

Die zuvor genannte Aufgabe wird ebenfalls durch ein Verfahren zum Bereitstellen eines angeforderten Massenstroms eines Fluids mit konstantem Druck gemäss Patentanspruch 14 gelöst. Hierbei werden lediglich jene Schnellschaltventile mit unterschiedlicher Nennweite geöffnet, geschlossen und/oder geschaltet, welche, in Abhängigkeit des festgestellten aktuellen Drucks im Fluidspeicher, für den benötigten Massenstrom und/oder Ausgangsdruck nötig sind. Hierdurch wird es erst ermöglicht, dass die jeweilige elektrische Leistungsaufnahme, die zum Schalten der Elektromagnetventilanordnung innerhalb eines jeden Schnellschaltventils notwendig ist, gering sein kann. Dies führt zur wesentlichen Reduktion der Bauteilgrösse der Elektromagnetventilanordnung und somit auch insgesamt zur Reduktion der Bauteilgrösse der jeweiligen Schnellschaltventile.

Ein weiterer Vorteil besteht darin, dass der Anker von der Elektromagnetventilanordnung im Vergleich zu der Lösung aus dem Stand der Technik ein geringeres Gewicht hat, wodurch die reziproke Frequenz der Bewegung des Ankers erhöht werden kann, welches wiederum ein schnelleres Schalten der Schnellschaltventile ermöglicht.

In einer besonders vorteilhaften Ausprägung des Verfahrens wird im Fall einer Fehlbestromung von wenigstens einem der Schnellschaltventile eine von dem festgestellten Druck abhängige, vorbestimmte Auswahl von Ventilen geöffnet, so dass ein tatsächlich abgegebener Massenstrom unterhalb des fehlerhaft angeforderten Massenstroms liegt. Damit wird eine Sicherheitsfunktion gegen Explosion oder rasche Druckexpansion des Fluids im Speicher zur Verfügung gestellt. Eine Fehlbestromung soll dabei vorliegen, wenn alle stromlos geschlossenen Ventile plötzlich bestromt werden, ohne dass ein entsprechender Massenstrom tatsächlich angefordert wird. Kommt es z.B. zu einer Fehlbestromung der Ventile derart, dass ohne tatsächliche Anforderung eines entsprechenden Massenstroms alle geöffnet werden sollen, so kann vorgesehen sein, dass bei einem festgestellten aktuellen Druck im Druckspeicher von 700 bar nur das Ventil mit der geringsten Nennweite bestromt wird. Bei einem niedrigeren festgestellten Druck von 400 bar kann dagegen vorgesehen sein, das die Ventile kleinster und zweitkleinster Nennweite bestromt werden. Abhängig vom festgestellten Druck kann natürlich auch eine andere gewünschte Ventilauswahl getroffen sein. Wichtig ist, dass durch diese Auswahl eine unerwünscht rasche Druckexpansion oder gar Explosion vermieden wird.

Die zuvor genannte Aufgabe wird ebenfalls durch eine Verwendung eines Tanksystems nach einem der Ansprüche 4 bis 13 zum Bereitstellen eines Brenngases, insbesondere von Wasserstoff, an eine Brennstoffzelle, insbesondere an eine Brennstoffzelle in einem Fahrzeug, gelöst. Durch diese Verwendung werden Fahrzeuge mit einer Brennstoffzelle bereitgestellt, welche unabhängig von jeweiligen Fahreigenschaften und Leistungsanforderungen einen hierauf angeforderten Massenstrom zwischen 0,005 g/sec und 2,500 g/sec, bei einem zuverlässig konstanten Ausgangsdruck von kleiner 4,0 bar, empfängt. Dies gilt zudem bei einem hohen Schwankungsbereich des Speicherdrucks zwischen 900 bar und 10 bar. Hierdurch wird dem Fahrzeug eine zuverlässige Antriebsquelle bereitgestellt, welches insgesamt zu verbesserten Fahreigenschaften führt. Die Verwendung dieses Tanksystems erlaubt ferner, im Vergleich zu verwendeten Tanksystemen aus dem Stand der Technik, eine Gewichtsreduktion. Hierdurch werden die Fahreigenschaften des Fahrzeugs verbessert und/oder die Reichweite des Fahrzeugs erhöht.

Die vorliegende Erfindung wird im Folgenden anhand von zwei Ausführungsformen unter Bezugnahme auf die beigelegten Figuren im Detail erläutert. Gleiche oder gleichwirkende Teile sind durch gleiche Bezugsziffern gekennzeichnet. Es zeigen:
- Figur 1: eine Prinzipskizze zur Verdeutlichung des Grundprinzips der Versorgung einer Brennstoffzelle mit einem angeforderten Massenstrom;
- Figur 2: eine perspektivische Ansicht einer Anordnung von Ventilen an mehreren Tankbehältern mit einem nachgeschalteten Druckregler gemäss dem Stand der Technik;
- Figur 3: eine perspektivische Ansicht einer Anordnung von pulsmodulierten Schnellschaltventilen in einem Ventilkopf eines Fluidspeichers, der als ein einziger Tankbehälter ausgebildet ist, gemäss einer ersten Ausführungsform der vorliegenden Erfindung;
- Figur 4: eine perspektivische Schnittansicht der in Figur 3 gezeigten Anordnung;
- Figur 5: eine perspektivische Schnittansicht eines pulsmodulierten Schnellschaltventils;
- Figur 6: ein Funktionsschaubild der in Figur 3 dargestellten Anordnung, mit einem Diagramm, welches die Schaltintervalle in Relation zur Zeit zeigt, und einem Diagramm, welches den Ausgangsdruck in Relation zur Zeit zeigt;
- Figur 7: eine perspektivische Ansicht einer Anordnung von pulsmodulierten Schnellschaltventilen in Ventilköpfen eines Fluidspeichers, welcher aus mehreren miteinander verbundenen Tankbehältern besteht, gemäss einer zweiten Ausführungsform der vorliegenden Erfindung;
- Figur 8: eine perspektivische Schnittansicht von einem der in Figur 7 gezeigten Tankbehältern, seinen Ventilkopf, seine Betankungs- und Niederdruckleitung;
- Figur 9: ein Funktionsschaubild der in Figur 7 gezeigten Anordnung, und
- Figur 10: ein Diagramm eines Kurvenverlaufes des Ausgangsdruckes in Relation zur Zeit.

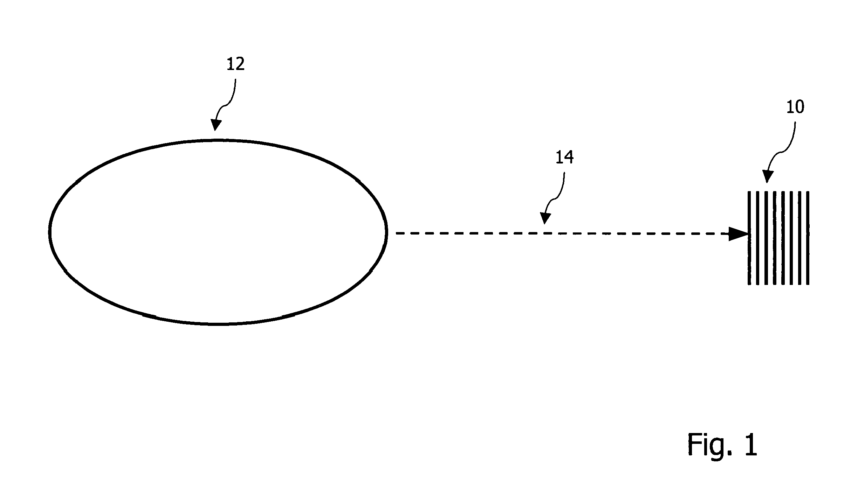

Figur 1 zeigt eine Prinzipskizze zur Verdeutlichung des Grundprinzips der Versorgung einer Brennstoffzelle 10 mit einem angeforderten Massenstrom. In diesem Beispiel wird die Brennstoffzelle 10 eines Fahrzeugs (nicht gezeigt) mit Wasserstoff versorgt. Bei diesem Prinzip sind u.a. zwei variable Parameter zu beachten, nämlich der vom Füllgrad eines Fluidspeichers 12 abhängige Eingangsdruck des Wasserstoffs in diesem Fluidspeicher 12 und der variable Parameter des über eine Versorgungsleitung 14 angeforderten Massenstroms an die Brennstoffzelle 10. Als einzige Konstante in diesem Zusammenwirken ist der am Ausgang der Versorgungsleitung 14 anliegende Ausgangsdruck zu sehen. Dieser Ausgangsdruck kann beispielsweise konstant 2,0 bar betragen, wohingegen der Massenstrom in Abhängigkeit der Anforderung in einem Bereich zwischen 0,008 g/sec und 2,500 g/sec liegt. Hierbei wird beispielsweise der geringste Massenstrom lediglich beim Leerlauf des Fahrzeugs angefordert, wohingegen der maximale Massenstrom bei der Höchstleistung des Fahrzeugs angefordert wird.

Wie eingangs erwähnt, spielt der zu reduzierende Eingangsdruck als Parameter eine wichtige Bedeutung. Dieser Eingangsdruck beträgt bei einem maximal mit Wasserstoff befüllten Fluidspeicher ungefähr 700 bar und fällt bei nahezu entleertem Fluidspeicher 12 auf wenige bar ab. Es ist eine Herausforderung, diese zwei stark variierenden Eingangsparameter derart zu regeln, dass am Ausgang der Versorgungsleitung 14 und Eingang der Brennstoffzelle 10 ein konstanter Ausgangsdruck von kleiner 4,0 bar bei einem jeweils angeforderten Massenstrom anliegt.

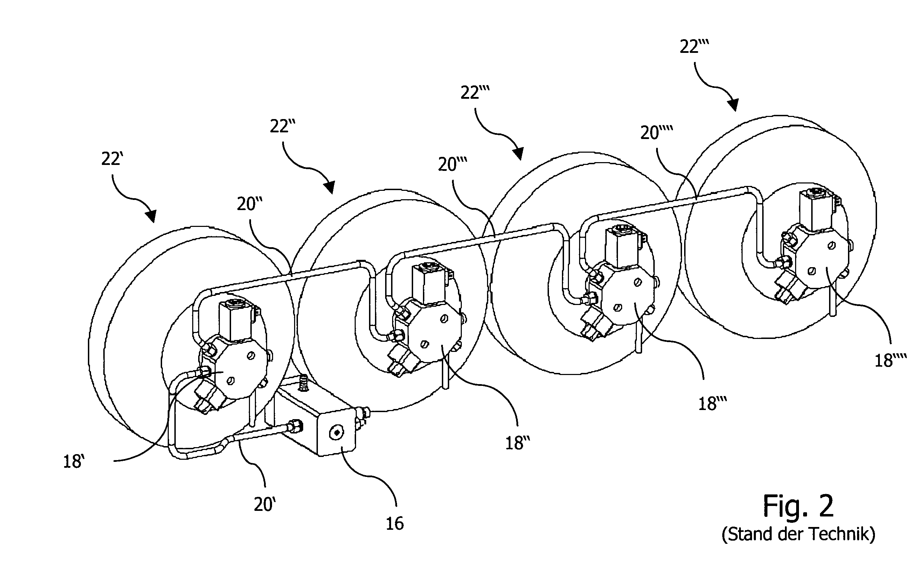

Figur 2 zeigt eine perspektivische Ansicht einer Anordnung von Ventilen an mehreren Tankbehältern 22' bis 22"" mit einem nachgeschalteten Druckregler 16 gemäss dem Stand der Technik. An jedem Tankbehälter 22' bis 22"" ist jeweils ein Ventilkopf 18' bis 18"" angebracht, die wiederum über Abzweigleitungen 20' bis 20"" miteinander verbunden sind. Somit stehen die einzelnen Tankbehälter 22' bis 22"" miteinander in Fluidverbindung, sodass ein Druckausgleich hergestellt ist. Der Ventilkopf 18' ist über die Abzweigleitung 20' mit einem Druckregler 16 verbunden.

Dieser stellt an seinem Ausgang ein Fluid, in diesem Fall Wasserstoff, mit einem Niederdruck von kleiner 4,0 bar, beispielsweise 2,0 bar, einer (hier nicht gezeigten) Brennstoffzelle zur Verfügung.

Diese Anordnung aus dem Stand der Technik hat mehrere Nachteile. Da die Abzweigleitungen 20' bis 20"" unter Hochdruck stehen, wird im Falle eines Zerberstens, beispielsweise hervorgerufen durch einen Unfall, in sehr kurzer Zeit eine grosse Menge von Wasserstoff freigesetzt, wodurch die Gefahr einer Entzündung und damit Explosion besteht. Die geforderten Dichtigkeitsanforderungen lassen sich beispielsweise nur über eine hohe Qualität der Ventilköpfe 18' bis 18"" und einen teuren Hochleistungskunststoff umsetzen. Ein weiterer Nachteil besteht darin, dass die durch den Druckregler 16 gelieferten Massenströme bei Ausbleiben eines Gegendrucks auf der Ausgangsseite grösser als spezifiziert sind.

Ferner hat der Druckregler 16 ein sehr hohes Gewicht von beispielsweise 2,5 kg und grosse Ausmasse von zum Beispiel 18,6 cm x 7,0 cm x 7,0 cm. Diese beiden Nachteile laufen Anstrengungen im Automobilsektor zur Gewichtsreduktion und Raumeinsparung zuwider. Der Druckregler 16 enthält bewegbare Ventilelemente mit einem hohen Gewicht von beispielsweise 330 g. Hierdurch wird der Verschleiss der Ventilelemente erhöht. Ferner sind die Ventilelemente im betriebsfreien Zustand dauerhaft in einer Ventilöffnungsposition, welches weitere Unfallgefahren mit sich bringt. Da in diesem Anwendungsbereich einstufige Druckregler lediglich einen Fluiddruck bis minimal ungefähr 15 bar regeln können, sind oftmals nachgeschaltete Druckregler nötig, wodurch weitere Kosten entstehen und das Gewicht erhöht wird.

Ein ganz wesentlicher Nachteil besteht ferner darin, dass der Druckregler 16 - wie vorstehend bereits beschrieben - ein vorgeschaltetes Abschaltventil benötigt, das aus Bauteilen unterschiedlicher Wärmeausdehnungskoeffizienten aufgebaut ist, die unter anderem ineinander laufen. Dabei treten bei den vorherrschend hohen Temperaturschwankungen grosse Versatze der einzelnen Bauteile untereinander auf, welche durch unterschiedliche Wärmeausdehnungen hervorgerufen werden. Hierbei können Funktionsstörungen auftreten.

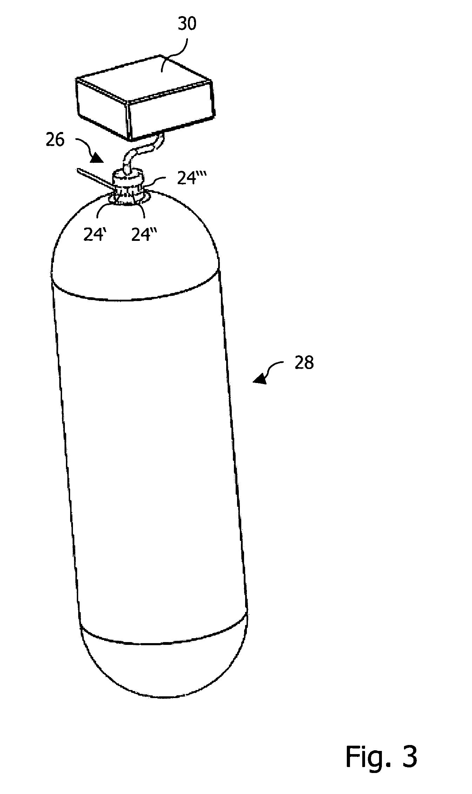

Figur 3 zeigt eine perspektivische Ansicht einer Anordnung von pulsmodulierten Schnellschaltventilen 24' bis 24"" in einem Ventilkopf 26 eines Fluidspeichers, der als ein einziger Tankbehälter 28 ausgebildet ist, gemäss einer ersten Ausführungsform der vorliegenden Erfindung. Aus Übersichtsgründen sind nur die sichtbaren Ventile 24' bis 24''' mit Bezugszeichen versehen. Der Ventilkopf 26 ist fluiddicht mit dem Tankbehälter 28 verbunden. Der Ventilkopf 26 steht ferner mit einer Betankungsleitung in Fluidverbindung. Bedingt durch die Darstellung sind in Figur 3 nur drei Schnellschaltventile 24' bis 24''' zu erkennen. Der Ventilkopf 26 kann jedoch mehrere, beispielsweise vier, fünf oder sechs Schnellschaltventile umfassen. Die jeweiligen Eingangsseiten der Schnellschaltventile 24' bis 24"' stehen mit dem Tankbehälter 28 in Fluidverbindung. Die jeweiligen Ausgangsseiten der Schnellschaltventile 24' bis 24''' stehen mit einer im Ventilkopf 26 integrierten Verzweigung in Fluidverbindung. An der Ausgangsseite bzw. Niederdruckseite des Ventilkopfes 26 ist ferner ein Ausgleichsbehälter 30 angeschlossen, welcher zur Absorption von Druckwellen ausgebildet ist. An der Ausgangsseite des Ausgleichsbehälters 30 ist eine Ausgangsleitung (nicht gezeigt) zur Versorgung einer Brennstoffzelle (nicht gezeigt) mit Wasserstoff angeschlossen.

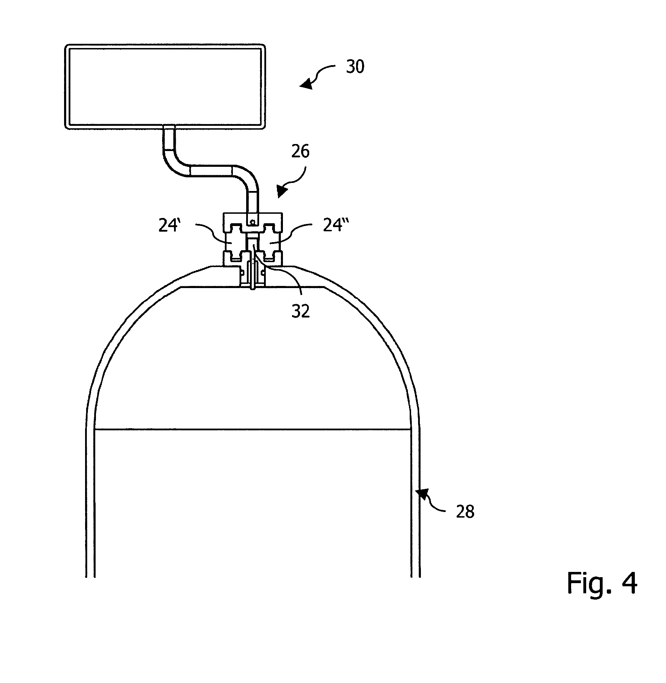

Figur 4 zeigt eine perspektivische Schnittansicht der in Figur 3 gezeigten Anordnung. In dieser Ansicht sind zwei der Schnellschaltventile 24' und 24'' in schematischer Schnittansicht dargestellt, welche in Umfangsrichtung innerhalb des Ventilkopfes 26 angeordnet sind. Wie zuvor erwähnt, sind dort vier Schnellschaltventile 24' bis 24"" angeordnet, je nach Anwendungsfall können aber auch mehr oder weniger Ventile gewählt sein. Die Schnellschaltventile 24' bis 24"" umfassen bei ansonsten identischem Aufbau Düsenkomponenten mit jeweils unterschiedlicher Nennweite zu deren jeweiligen Betrieb in unterschiedlichen Druckbereichen. Die jeweiligen Nennweiten sind so gewählt und auf einen Schwankungsbereich des Drucks in dem Tankbehälter 28 abgestimmt, dass über diesen Schwankungsbereich des Speicherdrucks hinweg ein gesamthaft abgegebener Massenstrom des Wasserstoffs aus dem Tankbehälter 28 in einem Schwankungsbereich anforderungsgemäss variierender Massenströme konstanten Drucks erzeugbar ist. Hierzu werden die einzelnen Schnellschaltventile 24' bis 24'' durch vollständiges Öffnen, vollständiges Schliessen und/oder Schalten einzelner Ventile oder Ventilkombinationen betrieben.

Beispielsweise enthält eines der Schnellschaltventile eine Düsenkomponente mit einer Nennweite von 0,5 mm, wobei dieses Schnellschaltventil dann bei einem Druck von beispielsweise 700 bis 15 bar durch vollständiges Öffnen oder Schalten bzw. Umschalten betrieben wird. Ein weiteres Schnellschaltventil kann eine Düsenkomponente mit einer Nennweite von ungefähr 1 mm enthalten, wobei dieses Schnellschaltventil dann bei einem Druck von beispielsweise 250 bis 15 bar durch vollständiges Öffnen oder Schalten bzw. Umschalten betrieben wird. Ein weiteres Schnellschaltventil kann eine Düsenkomponente mit einer Nennweite von 1,5 mm enthalten, wobei dieses Schnellschaltventil bei einem Eingangsdruck von 130 bis 15 bar durch vollständiges Öffnen oder Schalten bzw. Umschalten betrieben wird, usw. Bei dem untersten Eingangsdruck, das heisst bei einem Druck von weniger als 15 bar, öffnen dann alle Schnellschaltventile.

Somit kann die Nennweite der Düsenkomponente und damit auch der Querschnitt eines Schnellschaltventils mit der grössten Nennweite kleiner sein als der insgesamt benötigte Querschnitt für den maximalen Massenstrom bei 15 bar oder weniger. Der Ventilkopf 26 enthält ferner einen Temperatursensor 32 zum Messen der Temperatur des Ventilkopfs 26. Somit kann neben den Eingangsparametern aus Eingangsdruck, angeforderter Massenstrom und geforderter konstanter Ausgangsdruck ferner auch die Temperatur innerhalb des Ventilkopfes 26 zur Bestimmung einfliessen, welche Schnellschaltventile geöffnet, geschlossen oder geschaltet werden. Hierdurch wird ein besonders genauer Betrieb ermöglicht.

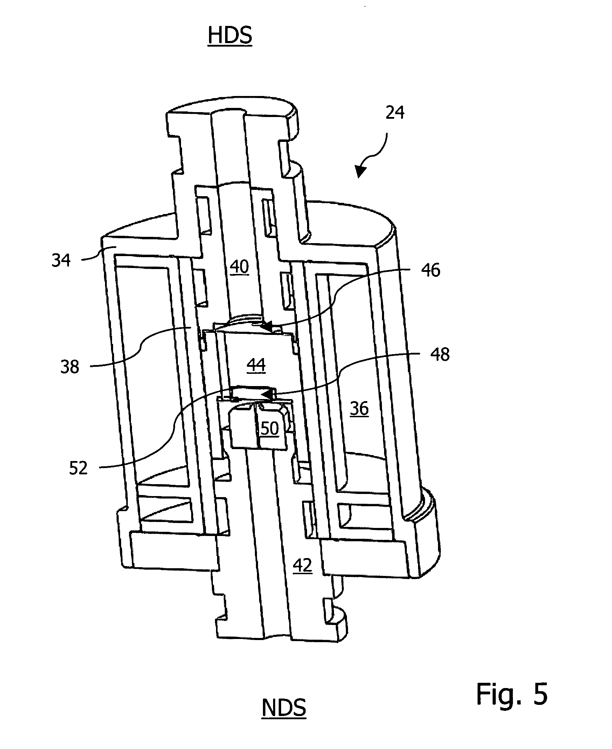

Figur 5 zeigt eine perspektivische Schnittansicht eines pulsmodulierten Schnellschaltventils 24. Das Ventil 24 umfasst ein zylindrisches Gehäuse 34, welches Spulenkörper 36 enthält, der wiederum ein Druckrohr 38 umgibt. Das Druckrohr 38 schliesst in seinem Inneren auf einer Hochdruckseite HDS einen Kern 40 und auf einer Niederdruckseite NDS ein Jochteil 42 ein. Innerhalb des Druckrohrs 38 und zwischen dem Kern 40 und Jochteil 42 ist ein Anker 44 untergebracht, der in axialer Richtung des Druckrohrs 38 bewegbar ist. Zwischen der Oberseite des Ankers 44 und dem Kern 40 ist eine erste Kammer 46 ausgebildet. Diese nimmt ein maximales Volumen ein, sobald sich der Anker 44 in der untersten Position befindet (wie in der Figur gezeigt). Zwischen der Unterseite des Ankers 44 und dem Jochteil 42 ist eine zweite Kammer 48 ausgebildet. Diese nimmt ein maximales Volumen ein, sobald der Anker 44 in die entgegengesetzte Position bewegt wird.

Das Jochteil 42 enthält an seinem oberen Ende einen Sitz, in welchem eine Düsenkomponente 50 eingesetzt ist. Diese Düsenkomponente 50 hat eine vorbestimmte Nennweite. In der Figur ist der Fluidpfad von der Hochdruckseite HDS zur Niederdruckseite NDS durch Pfeile gezeigt. Das Fluid fliesst über den Kern 40 in die erste Kammer 46 und fliesst über zwei innerhalb des Ankers 44 in Axialrichtung eingebrachte Bohrungen in Richtung der zweiten Kammer 48. Von dort aus fliesst das Fluid über die Düsenkomponente 50 in das Jochteil 42 und von dort aus zur Niederdruckseite NDS. Das Zusammenwirken zwischen dem Eingangsdruck auf der Hochdruckseite HDS, dem Druck in der ersten Kammer 46 und der daraus resultierenden Kraft auf den Anker 44, sowie dem Druck in der zweiten Kammer 48 und der daraus resultierenden Kraft auf den Anker 44, bestimmt im Wesentlichen die Position des axial beweglichen Ankers 44.

Hierbei spielt die Nennweite der Düsenkomponente 50 eine wesentliche Rolle. Je kleiner die Nennweite ist, desto kleiner ist die Schliesskraft und Schliesstendenz des Ankers 44, da die Druckdifferenz zwischen der Hochdruckseite HDS und der Niederdruckseite NDS, multipliziert mit der Querschnittsfläche der Düse, geringer wird. Das in der Figur gezeigte Schnellschaltventil 24 ist derart ausgelegt, dass sich der Anker 44 im unbestromten Zustand des Spulenkörpers 36 in der Ventilschliessposition befindet, in die er durch den anliegenden Hochdruck bewegt wird. Um den Anker 44 gegen den Hochdruck axial verschieben und somit in die Ventilöffnungsposition bewegen bzw. schalten zu können, sind der Spulenkörper 36 und der Anker 44, zusammen mit dem Gehäuse 34, dem Kern 40 und dem Jochteil 42 als Elektromagnet ausgestaltet. Die Elektromagnetventilanordnung ergibt sich schliesslich aus dem Zusammenwirken dieses Elektromagneten mit der Düsenkomponente 50 und einem Dichtungselement 52, das an der jochseitigen Unterseite des Ankers 44 vorgesehen ist. Bei einer Bestromung des Spulenkörpers 36 wird ein elektromagnetisches Feld erzeugt, das eine Kraft auf den Anker 44 in Richtung zur Ventilöffnungsposition (das heisst in der Figur nach oben gerichtet) ausübt. Der Spulenkörper 36 und der Anker 44 sind derart zueinander ausgelegt, dass bei einer Bestromung des Spulenkörpers 36 die Leistung ausreicht, um den Anker 44 in die Ventilöffnungsposition zu verschieben. An den axialen Enden des Spulenkörpers 36 verläuft das magnetische Feld dabei über das Ventilgehäuse 34 hinweg zum Kern 40 bzw. zum Jochteil 42. Durch Auslegung dieser Teile 34, 40 und 42 aus einem magnetisch leitfähigen Material wird das Magnetfeld verstärkt und in der Wirkung auf den Anker 44 gebündelt. Da der Anker 44 zudem wenigstens teilweise das Jochteil 42 umgreift, ist der magnetische Fluss an dieser Stelle nicht unterbrochen, was seine Wirkung weiterhin verstärkt. Dadurch ist das gleiche Ventil 24 über einen weiten Druckbereich hinweg einsetzbar, ohne dass Ventile anderer Bauart gefordert wären.

Bei Schnellschaltventilen 24 mit einer eingesetzten Düsenkomponente 50 mit einer im Vergleich zum vorherigen Beispiel grösseren Nennweite wird bei einer ansonsten gleichen Druckdifferenz zwischen der Hochdruckseite HDS und der Niederdruckseite NDS eine grössere Schliesskraft und Schliesstendenz erzeugt. Hierbei reicht oftmals die Elektromagnetkraft nicht aus, um den Anker 44 in die Ventilöffnungsposition zu bewegen. Dies hat den Vorteil, dass auch im Falle einer unbeabsichtigten Bestromung des Elektromagneten (34, 36, 40, 42, 44) oder bei einem Bauteilausfall kein unkontrolliert grosser Massenstrom austreten kann. Erst bei einem abnehmenden Druck auf der Hochdruckseite HDS und einer daraus resultierenden reduzierten Kräftedifferenz auf den Anker 44 reicht die Leistung der Elektromagnetventilanordnung aus, um den Anker 44 in Ventilöffnungsposition zu bewegen.

Durch geeignete Wahl der jeweiligen Nennweiten der unterschiedlichen Düsenkomponenten 50 in den unterschiedlichen Schnellschaltventilen 24 werden somit Druckbereiche auf der Hochdruckseite definiert, innerhalb welcher die definierten Schnellschaltventile betrieben werden können. Der Betrieb umfasst hierbei das vollständige Öffnen, vollständige Schliessen und/oder Schalten bzw. Umschalten der Fluidverbindung. Zur zuverlässigen Abdichtung des Schnellschaltventils 24 in Ventilschliessposition ist an der Unterseite des Ankers 44 ein Dichtungselement 52 angebracht, welches seitens der zweiten Kammer 48 gegen die Öffnung der Düsenkomponente 50 drückt und somit fluiddicht abdichtet.

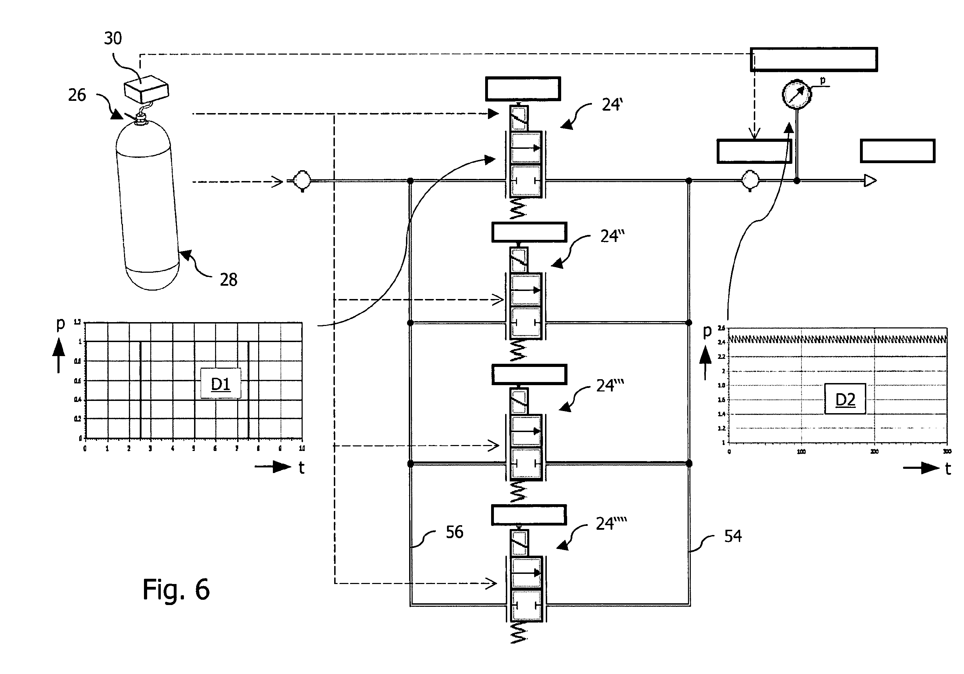

Figur 6 zeigt ein Funktionsschaubild der in Figur 3 gezeigten Anordnung, mit einem Diagramm D1, welches die Schaltintervalle in Relation zur Zeit t zeigt, und einem Diagramm D2, welches den Ausgangsdruck p in Relation zur Zeit t zeigt. Die Positionen der jeweiligen Messaufnahme sind durch Pfeile gekennzeichnet. Das erste Diagramm D1 zeigt den Zyklus der Beschaltung des ersten Schnellschaltventils 24' durch ein Schalten bzw. Umschalten.

Die jeweilige Ausgangsseite der pulsmodulierten Schnellschaltventile 24' bis 24"" ist über eine Niederdruckleitung 54 mit einer Brennstoffzelle (nicht gezeigt) verbunden. Die jeweilige Eingangsseite der pulsmodulierten Schnellschaltventile 24' bis 24"" ist wiederum über eine Betankungsleitung 56 mit dem Tankbehälter 28 verbunden. An dem Tankbehälter 28 sind der Ventilkopf 26 und der Ausgleichsbehälter 30 angeschlossen. Die innerhalb des Ventilkopfs 26 enthaltenen Schnellschaltventile 24' bis 24"" sind schematisch gezeigt. Die gestrichelten Linien verweisen auf die jeweiligen Komponenten in der schematischen Darstellung. Die Schnellschaltventile 24' bis 24"" enthalten eine jeweilige Düsenkomponente mit unterschiedlicher Nennweite, die vom Ventil 24"" ausgehend zum Ventil 24' stufenweise kleiner wird.

In Abhängigkeit des jeweils im Tankbehälter 28 vorherrschenden Drucks und des angeforderten Massenstroms werden, in Druckbereiche unterteilt, einzelne Schnellschaltventile 24' bis 24"" durch vollständiges Öffnen, vollständiges Schliessen und/oder Schalten bzw. Umschalten betrieben. Bei einem Maximaldruck kann, wie zuvor beschrieben, lediglich das Schnellschaltventil 24' (mit der kleinsten Nennweite) zum vollständigen Öffnen und/oder Schalten bzw. Umschalten betrieben werden, da nur hier die Leistung der Elektromagnetventilanordnung ausreicht, um den Anker (nicht gezeigt) in Ventilöffnungsposition zu bewegen. Im Umkehrschluss brauchen daher die Elektromagnetventilanordnungen lediglich derart ausgelegt zu werden, dass deren Leistung dazu ausreicht, den Anker in zumindest deren vorbestimmten Druckbereichen zu bewegen. Daraus folgend können die Elemente der Elektromagnetventilanordnung, nämlich der Elektromagnet und der Anker (beide nicht gezeigt) derart ausgelegt sein, dass sie eine geringe Baugrösse und ein geringes Gewicht haben. Somit haben auch insgesamt die einzelnen Schnellschaltventile 24' bis 24"" eine geringe Baugrösse und ein geringes Gewicht und sind zusätzlich kostengünstig.

Beispielsweise kann der Druck des durch den Tankbehälter 28 bereitgestellten Wasserstoffs in einem Druckbereich zwischen 700 bar und 500 bar liegen. Um diesen Druck auf einen geforderten Ausgangsdruck von ungefähr 2,4 bar zu reduzieren, wird das Umschaltventil 24' mit dem im Diagramm D1 gezeigten Schaltzyklus geschaltet. Hier hat jeder Schaltzyklus eine Dauer von 2,5 Sekunden, was einer Frequenz von 0,4 Hz entspricht. Der an der Ausgangsseite anliegende Druck ist im Diagramm D2 gezeigt. Der Kurvenverlauf des Diagramms D2 zeigt, dass an der Ausgangsseite ein Druck in einem Bereich zwischen 2,4 und 2,5 bar sägezahnförmig schwankend anliegt. Diese sägezahnförmige Schwankung liegt innerhalb des Toleranzbereiches und könnte beispielsweise weiter verringert werden, indem Änderungen am Ausgleichsbehälter 30 vorgenommen werden. Bei einem maximalen Eingangsdruck von 700 bar und einem geforderten minimalen Massenstrom von 0,008 g/sec wird ebenfalls lediglich das Ventil 24' mit der kleinsten Nennweite geschaltet, was auch bei einem mittleren Eingangsdruck von 350 bar und einem geforderten minimalen Massenstrom von 0,008 g/sec der Fall ist. Dagegen wird bei einem mittleren Eingangsdruck von 350 bar und einem geforderten maximalen Massenstrom von 2,500 g/sec das Ventil 24' schliesslich permanent geöffnet und das Ventil 24'' geschaltet. Bei einem minimalen Eingangsdruck von 15 bar und einem geforderten maximalen Massenstrom von 2,500 g/sec werden dagegen alle vier Ventile 24' bis 24"" permanent geöffnet.

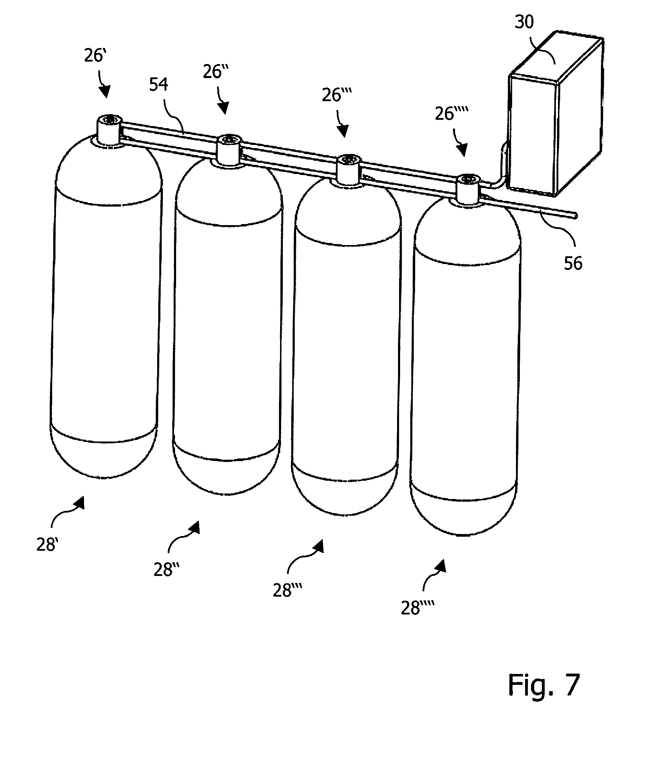

Figur 7 zeigt eine perspektivische Ansicht einer Anordnung von pulsmodulierten Schnellschaltventilen in Ventilköpfen 26' bis 26"" eines Fluidspeichers, welcher aus mehreren miteinander verbundenen Tankbehältern 28' bis 28"" besteht, gemäss einer zweiten Ausführungsform der vorliegenden Erfindung. Der Fluidspeicher besteht somit in diesem Beispiel aus vier miteinander verbundenen Tankbehältern 28' bis 28"", die einen jeweils einzigen Ventilkopf 26' bis 26"" aufweisen. Jeder Ventilkopf 26' bis 26"" umfasst wiederum ein einziges Schnellschaltventil (nicht gezeigt). Die Ausgangsseiten der jeweiligen Schnellschaltventile stehen über eine Niederdruckleitung 54 miteinander in Verbindung. Diese Niederdruckleitung 54 steht mit dem zuvor beschriebenen Ausgleichsbehälter 30 zur Absorption von Druckwellen in Verbindung. Dieser Ausgleichsbehälter 30 steht wiederum über eine weitere Leitung mit einer Brennstoffzelle (nicht gezeigt) in Verbindung, kann aber auch als Totvolumen in der Tankleitung oder Brennstoffzelle selbst ausgestaltet sein.

Die Anordnung wird über eine Betankungsleitung 56 betankt. Die Betankungsleitung 56 erstreckt sich ferner jeweils zwischen den Hochdruckseiten der einzelnen Ventilköpfe 26' bis 26"" und ist dort jeweils zu deren Innenraum hin geöffnet, sodass die gesamte Betankungsleitung 56 insgesamt mit allen Tankbehältern 28' bis 28"" in Fluidverbindung steht. Über diese Betankungsleitung 56 wird somit auch stets ein Druckausgleich zwischen den einzelnen Tankbehältern 28' bis 28"" hergestellt.

Die in den einzelnen Ventilköpfen 26' bis 26"" angeordneten Schnellschaltventile werden in Abhängigkeit des Eingangsdrucks, des angeforderten Massenstroms und des vorgegebenen konstanten Ausgangsdrucks einzeln betrieben, wie bereits im Zusammenhang mit Figur 6 beschrieben.

Ein Vorteil dieser Anordnung gemäss der zweiten Ausführungsform gegenüber jener gemäss der ersten Ausführungsform besteht darin, dass sich der gesamte Fluidspeicher, welcher hier durch die vier Tankbehälter 28' bis 28"" ausgebildet wird, flexibler entwerfen lässt. Unter der Voraussetzung der Bevorratung eines gleichen Fluidvolumens können die vier Tankbehälter 28' bis 28"", welche jeweils ein Viertel des Fluidvolumens im Vergleich zu dem Tankbehälter gemäss der ersten Ausführungsform fassen, bedingt durch ihre somit geringere Baugrösse flexibler, platzsparender und kompakter in einen jeweiligen Aufnahmeraum eines Fahrzeugs untergebracht werden.

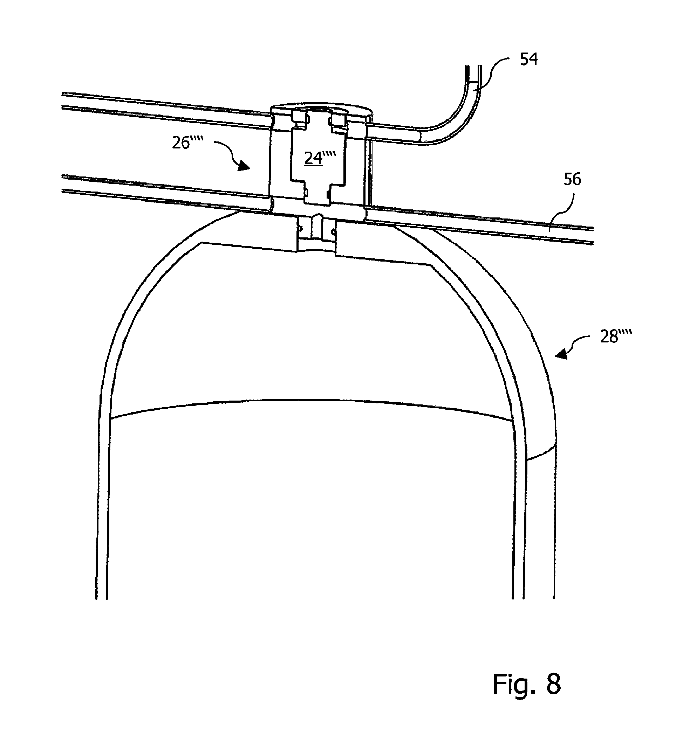

Figur 8 zeigt eine perspektivische Schnittansicht von einem der in Figur 7 gezeigten Tankbehältern 28"", seinen Ventilkopf 26"", seine Betankungsleitung 56 und die zum Ausgleichsbehälter (nicht gezeigt) führende Niederdruckleitung 54. Wie zuvor beschrieben, verläuft die Betankungsleitung 56 zwischen den einzelnen Ventilköpfen, wobei diese eine jeweilige Bohrung zur Durchleitung enthalten, welche eine Öffnung zum Innenraum des Tankbehälters 28"" hin aufweist. In dieser Schnittansicht ist das im Ventilkopf 26"" angeordnete (einzelne) Schnellschaltventil 24"" schematisch gezeigt. Die Ausgangsseiten der jeweiligen Schnellschaltventile sind über die Niederdruckleitung 54 miteinander verbunden. Ein besonderer Vorteil dieser Anordnung besteht darin, dass die jeweiligen Schnellschaltventile eine sehr geringe Baugrösse haben, wodurch wiederum vorteilhafterweise die Baugrösse von jedem Ventilkopf reduziert werden kann. Ein beispielhafter Ventilkopf kann eine Länge von 4,5 cm (gemessen von der Oberseite des Tankbehälters) und einen Durchmesser von 4,5 cm haben.

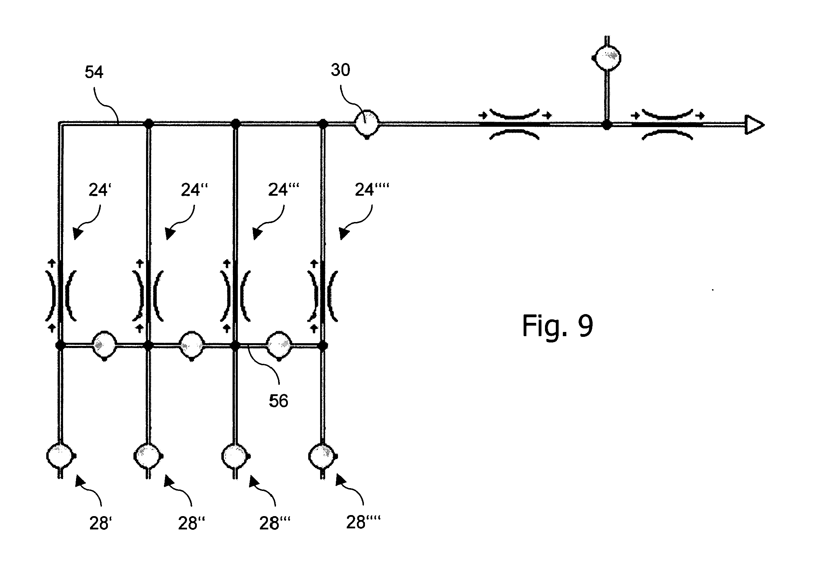

Die Figur 9 zeigt ein Funktionsschaubild der in Figur 7 gezeigten Anordnung, deren Schnellschaltventile 24' bis 24"" in Abhängigkeit vom Speicherdruck so beschaltet werden, wie dies bereits mit Blick auf Figur 6 erläutert wurde. Das erfindungsgemässe Prinzip der Beschaltung ist damit grundsätzlich unabhängig davon, ob der Fluidspeicher ein oder mehrere Tankbehälter (beispielsweise Tankbehälter 28' bis 28"") umfasst. Entscheidend ist, dass alle anliegenden Drücke durch eine entsprechende Auswahl und Anordnung der Ventile 24' bis 24"" anforderungsgemäss geregelt werden können.

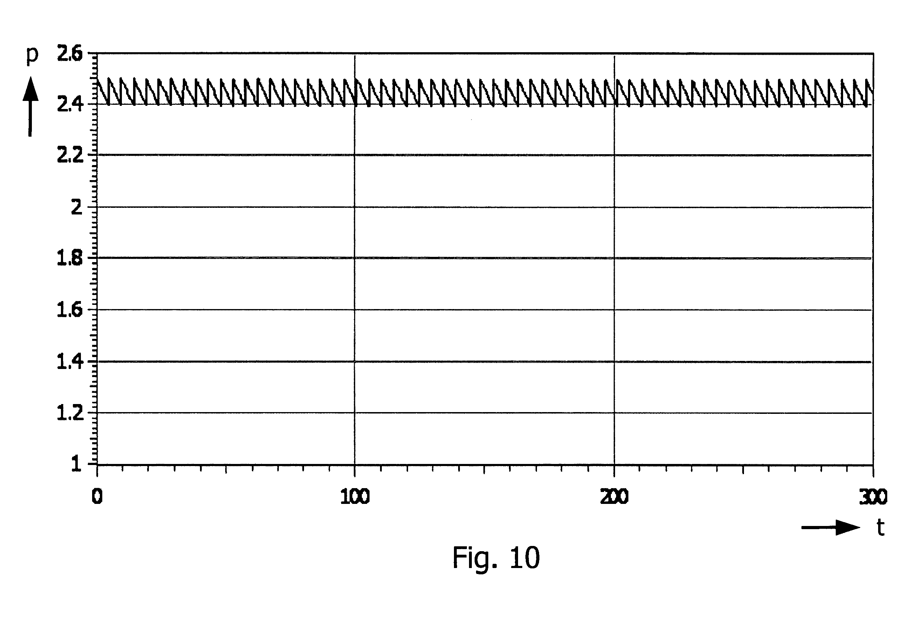

Figur 10 zeigt ein Diagramm eines Kurvenverlaufes des Ausgangsdruckes p in Relation zur Zeit t von der in Figur 7 gezeigten Anordnung. Hierbei ist zu erkennen, dass der reduzierte Ausgangsdruck in einem Bereich zwischen 2,4 und 2,5 bar mit einem Sägezahnverlauf schwankt. Diese Schwankung in einem Bereich von 0,1 bar ist im Vergleich zum Stand der Technik gering und kann durch eine Verifizierung des Ausgleichsbehälters noch weiter reduziert werden.

## Patentansprüche

1. Anordnung von pulsmodulierten Schnellschaltventilen (24; 24' ... 24"") an einem Fluidspeicher (12), wobei die Ventile (24; 24' ... 24"") bei ansonsten identischem Aufbau unterschiedliche Nennweiten zu deren Betrieb in unterschiedlichen Druckbereichen aufweisen, und die Anzahl der Ventile (24; 24' ... 24"") und deren jeweilige Nennweiten so gewählt und auf einen Schwankungsbereich des Drucks in dem Speicher (12) abgestimmt sind, dass über diesen Schwankungsbereich des Speicherdrucks hinweg, durch vollständiges Öffnen, vollständiges Schliessen und/oder Schalten einzelner Ventile (24; 24' ... 24"") oder Ventilkombinationen, ein gesamthaft abgegebener Massenstrom des Fluids aus dem Speicher (12) in einem Schwankungsbereich anforderungsgemäss variierender Massenströme konstanten Drucks erzeugbar ist.

2. Anordnung nach Anspruch 1, bei welcher der Fluidspeicher (12) als ein einziger Tankbehälter (28) ausgebildet ist, welcher einen Ventilkopf (26) aufweist, der eine Gruppe von Schnellschaltventilen (24' ... 24"") umfasst.

3. Anordnung nach Anspruch 1, bei welcher der Fluidspeicher (12) aus mehreren miteinander verbundenen Tankbehältern (28' ... 28"") besteht, die einen jeweiligen Ventilkopf (26' ... 26"") aufweisen, welcher ein einziges Schnellschaltventil (24) umfasst.

4. Tanksystem, mit einem Fluidspeicher (12) zum Aufnehmen und Bereitstellen eines Fluids, und mehreren pulsmodulierten Schnellschaltventilen (24; 24' ... 24"") zum Entnehmen des Fluids aus dem Speicher (12), wobei die Ventile (24; 24' ... 24"") bei ansonsten identischem Aufbau unterschiedliche Nennweiten zu deren Betrieb in unterschiedlichen Druckbereichen aufweisen, und die Anzahl der Ventile (24; 24' ... 24"") und deren jeweilige Nennweiten so gewählt und auf einen Schwankungsbereich des Drucks in dem Speicher (12) abgestimmt sind, dass über diesen Schwankungsbereich des Speicherdrucks hinweg, durch vollständiges Öffnen, vollständiges Schliessen und/oder Schalten einzelner Ventile oder Ventilkombinationen, ein gesamthaft abgegebener Massenstrom des Fluids aus dem Speicher (12) in einem Schwankungsbereich anforderungsgemäss variierender Massenströme konstanten Drucks erzeugbar ist.

5. Tanksystem nach Anspruch 4, bei dem die Schnellschaltventile (24; 24' ... 24"") ein jeweiliges Druckrohr (38) aufweisen, mit einem darin gegen eine Düsenkomponente (50) beweglich gelagerten Anker (44) aus einem magnetisch leitfähigen Material, wobei das Druckrohr (38) von einem zylinderförmigen Spulenkörper (36) umgeben ist, dessen axiale Enden über einen Bewegungsbereich des Ankers (44) in dem Rohr hinausreichen und magnetisch leitfähig mit einem Kern (40) und einem Jochteil (42) des jeweiligen Ventils (24; 24' ... 24"") verbunden sind, die den Bewegungsbereich des Ankers (44) in dem Druckrohr (38) festlegen, und der Anker (44) das Jochteil (42) wenigstens teilweise umgreift.

6. Tanksystem nach Anspruch 4 oder 5, bei dem der Fluidspeicher (12) als ein einziger Tankbehälter (28) ausgebildet ist, welcher einen damit verbundenen Ventilkopf (26) aufweist, der eine Gruppe von Schnellschaltventilen (24' ... 24"") umfasst.

7. Tanksystem nach Anspruch 4 oder 5, bei dem der Fluidspeicher (12) aus mehreren miteinander verbundenen Tankbehältern (28' ... 28"") besteht, die einen jeweils damit verbundenen Ventilkopf (26' ... 26"") aufweisen, welcher ein einziges Schnellschaltventil (24) umfasst.

8. Tanksystem nach einem der Ansprüche 6 oder 7, bei dem eine Niederdruckseite des wenigstens einen Ventilkopfs (26; 26' ... 26"") zur Absorption von Druckwellen mit einem Ausgleichsbehälter (30) verbunden ist.

9. Tanksystem nach einem der Ansprüche 6 bis 8, bei dem der wenigstens eine Ventilkopf (26; 26' ... 26"") einen Temperatursensor (32) zum Messen der Temperatur des Fluids in dem Tankbehälter umfasst.

10. Tanksystem nach einem der Ansprüche 6 bis 9, bei dem eine Hochdruckseite des wenigstens einen Ventilkopfs (26; 26' ... 26'''') mit wenigstens einer Betankungsleitung verbindbar ist.

11. Tanksystem nach einem der Ansprüche 4 bis 10, bei dem die Schnellschaltventile (24; 24' ... 24"") eine Düsenkomponente (50) mit jeweils unterschiedlicher Nennweite aufweisen.

12. Tanksystem nach einem der Ansprüche 4 bis 11, bei dem die Nennweite der einzelnen Schnellschaltventile (24; 24' ... 24"") in einem Bereich von ungefähr 0,2 mm bis 2,5 mm liegt.

13. Tanksystem nach einem der Ansprüche 4 bis 12, bei dem der Schwankungsbereich des Speicherdrucks zwischen 10 bar und 900 bar und der Schwankungsbereich des angeforderten Massenstroms zwischen 0,005 g/sec und 2,500 g/sec bei einem konstanten Ausgangsdruck von kleiner 4 bar liegen.

14. Verfahren zum Bereitstellen eines angeforderten Massenstroms eines Fluids mit konstantem Druck, wobei das Fluid aus einem Fluidspeicher (12) variablen Drucks entnehmbar ist, umfassend die Schritte:
Feststellen des aktuellen Drucks in dem Speicher (12) und Feststellen des angeforderten Massenstroms;
Öffnen, Schliessen und/oder Schalten von pulsmodulierten Schnellschaltventilen (24; 24' ... 24"") unterschiedlicher Nennweite an dem Speicher (12) in Abhängigkeit des festgestellten Drucks, so dass der angeforderte Massenstrom konstanten Drucks erzeugt wird;
Wiederholen der vorstehenden Schritte im Laufe des Entnehmens des Fluids aus dem Speicher (12).

15. Verfahren nach Anspruch 14, bei dem im Fall einer Fehlbestromung von wenigstens einem der Schnellschaltventile (24; 24' ... 24"") eine von dem festgestellten Druck abhängige, vorbestimmte Auswahl von Ventilen (24; 24' ... 24"") geöffnet wird, so dass ein tatsächlich abgegebener Massenstrom unterhalb des fehlerhaft angeforderten Massenstroms liegt.

16. Verwendung eines Tanksystems nach einem der Ansprüche 4 bis 13 zum Bereitstellen eines Brenngases, insbesondere von Wasserstoff, an eine Brennstoffzelle (10), insbesondere an eine Brennstoffzelle (10) in einem Fahrzeug.
